# EUROPÄISCHE PATENTSCHRIFT

(11) **EP 1 609 233 B1**
(45) Veröffentlichungstag und Bekanntmachung des Hinweises auf die Patenterteilung: **20.12.2017**
(21) Anmeldenummer: 04722566.9
(22) Anmeldetag: 23.03.2004
(51) Int. Cl.: H02K 41/03, F16C 33/04

(54) **WANDERFELD-LINEARMOTOR**
GLIDING FIELD LINEAR MOTOR
MOTEUR LINEAIRE A CHAMP D'ONDES PROGRESSIVES

(30) Priorität: 24.03.2003 DE 10314133; 20.05.2003 DE 10323629
(43) Veröffentlichungstag der Anmeldung: 28.12.2005
(73) Patentinhaber: Technische Universität Berlin, 10623 Berlin (DE)
(72) Erfinder: LEHR, Heinz, 14197 Berlin (DE); SCHRADER, Stephan, 10117 Berlin (DE); WALTER, Steffen, 13129 Berlin (DE)
(74) Vertreter: Eisenführ Speiser
(86) Internationale Anmeldenummer: PCT/EP2004/003086
(87) Internationale Veröffentlichungsnummer: WO 2004/086595

(56) Entgegenhaltungen:
- EP-A- 0 165 584
- DE-A- 19 618 355
- GB-A- 645 281
- US-A- 3 663 071
- US-A- 5 691 582
- "Wanderwelle", , Retrieved from the Internet: URL:https://de.wikipedia.org/wiki/Wanderwe lle [retrieved on 2016-11-03]

## Beschreibung

Die Erfindung betrifft einen elektromagnetischen Wanderfeld-Linearmotor, der eine Magnetspulenanordnung sowie einen relativ zur Magnetspulenanordnung linear beweglichen Permanentmagneten aufweist. Die Magnetspulenanordnung umfasst dabei wenigstens drei Magnetspulen, die so ausgebildet und angeordnet sind, dass ein magnetisches Wanderfeld zum positionsgenauen Bewegen des Permanentmagneten zu erzeugen ist.

Außerdem betrifft die Erfindung einen Antrieb für optische Elemente wie beispielsweise Linsen, Prismen, Spiegel, Blenden, CCD-Chips usw.

Insbesondere die Miniaturisierung von optischen Systemen, die motorisch verschiebbare optische Elemente enthalten (Linse, Prisma, Spiegel, Blende, CCD-Chip, etc.), erfordert die Entwicklung besonderer Antriebstechniken.

Hierbei sind eine Reihe optischer Anforderungen einzuhalten, beispielsweise eine gute Positionierbarkeit, eine beliebig lange Verfahrstrecke des zu bewegenden optischen Elements, eine individuelle Verschiebung von mehreren optischen Komponenten mit überschneidenden Verfahrwegen, Freihalten des Strahlengangs in allen Stellungen des optischen Elements, etc.

Aus dem US-Patent 5 490 015 ist ein piezoelektrischer Stellantrieb zur Bewegung einer Fokussierlinse bekannt. Dabei wird ein piezoelektrischer Stapelaktor impulsförmig erregt, wodurch sich die mit dem Aktor verbundene Fokussierlinsenhalterung kurzzeitig bewegt. Längere Stellwege lassen sich durch eine zeitliche Abfolge von Spannungsimpulsen erzielen. Allerdings führen der einseitige Krafteingriff des Aktors sowie dessen impulsartige Betätigung zu einer longitudinalen Ruckbewegung, deren Amplitude empfindlich von der örtlichen Haftreibung bestimmt wird, so dass Verstellgeschwindigkeit und Stellgenauigkeit begrenzt sind. Störend sind auch die zur Betätigung des Aktors notwendigen hohen Spannungsimpulse, die z. B. das Videobild beeinträchtigen. Insgesamt erschwert die Ausführung dieses Aktors die Verstellung mehrerer Linsengruppen, behindert die Miniaturisierung der gesamten Anordnung und ist wegen der Piezoaktorik bei Temperaturen über 100 °C (z. B. Sterilisation medizinischer Instrumente bei 133 °C, Überwachung von Schweißvorgängen usw.) nur schwer einsetzbar.

Zur Ansteuerung eines Zoomobjektivs sind aus der DE 43 12 489 A1 beispielsweise motorische Antriebssysteme bekannt, die zur Kraftübertragung vom Motor auf die Halterung des Zoomobjektivs Ritzel, Zahnräder und Helixführungen einsetzen. Allerdings wird der Einsatz solcher Elemente offensichtlich eine Miniaturisierung optischer Instrumente erschweren.

Aus der DE 199 27 129 C1 sind streifenförmige piezoelektrische Biegeaktoren bekannt, die zur Verstellung einer Fokussierlinse dienen. Dabei bewegen sich die streifenförmigen bimorphen Piezoaktoren bei Anlegen einer Spannung orthogonal zur Verstellrichtung der Fokussierlinse. Gelenkglieder zwischen der Fokussierlinse sowie den Piezostreifen besorgen schließlich die Bewegung der Fokussierlinse entlang der optischen Achse des Linsensystems. Dem Vorteil der kontinuierlichen haftreibungsfreien Bewegung stehen allerdings die Nachteile eines erheblichen, den Durchmesser vergrößernden Platzbedarfs des Antriebssystems sowie dessen beschränkter Stellbereich gegenüber.

Aus der DE 199 27 129 C1 ist gleichermaßen die Bewegung eines Zoomobjektivs durch einen Schrittmotor bekannt. Allerdings befindet sich der Motor nicht in der Längsachse des Linsensystems, so dass der gesamte Durchmesser erheblich vergrößert wird.

Aus der Offenlegungsschrift DE 196 18 355 A1 ist ein elektrodynamischer Antrieb gemäß dem Oberbegriff des Anspruchs 1 bekannt, der aus einer permanentmagnetischen Hülse besteht, die in einem Hüllrohr gleitet und bei Bestromung zweier gegenläufig gewickelter Solenoide durch Lorentzkräfte bewegt wird (Tauchspulenprinzip). Allerdings weist dieser Aktor, der bei Endoskopen eingesetzt werden soll, einige Nachteile auf: Bei Bestromung der Solenoide fährt der Permanentmagnet an eine Endposition, die durch die Länge des Magneten und die gegenläufig gewickelten Solenoide festgelegt ist. Da der Aktor über keine natürliche Haltestellung sowie keine Selbsthaltung verfügt, lässt sich die Positionierung von Linsen oder Linsengruppen sowie die Fixierung ihrer Position, z. B. beim Auftreten von Beschleunigungskräften, durch einen Regelkreis erzielen, wobei eine Wegmessung, wie sie in der DE 196 05 413 A1 beschrieben ist, erforderlich wird. Alternativ hierzu wäre zur Positionierung die Bewegung gegen eine Federkraft denkbar, die dann jedoch zusätzlichen Platz beansprucht. In beiden Fällen steigt aber der Aufwand erheblich. Der mögliche Verfahrweg des Magneten wird durch die Länge der gesamten magnetischen Anordnung festgelegt. Will man bei einem Motor auf Tauchspulenbasis große Verfahrwege realisieren, so ist dies nur durch eine entsprechende magnetische Länge des Läufers sowie mindestens doppelt so lange Solenoidspulen erreichbar. Dies kann aufgrund der Zunahme der axialen Länge der schmalen Bohrung des Läufers zu einer Beeinträchtigung des optischen Strahlengangs führen. Weiterhin wird durch lange Solenoide der Einsatz mehrerer unabhängiger, axial in Reihe angeordneter und angetriebener optischer Elemente problematisch. Die Pole des Läufers können sich nicht über die zugeordneten Spulen hinausbewegen. Dadurch ist das Verfahren von einem Läufer in das Spulensystem eines anderen Läufers sowie überlappende Verfahrstrecken verschiedener Läufer gänzlich unmöglich. Hieraus ergeben sich wesentliche Einschränkungen bei der Gestaltung des optischen Systems.

Aus der GB 2 358 967 ist ein Linearmotor mit einem Läufer bekannt, der eine zentrale Öffnung besitzt und sich in einem rohrartigen Stator bewegen kann.

Es ist Aufgabe der vorliegenden Erfindung, einen möglichst kleinen, einfachen und positionsgenauen Antrieb der eingangs genannten Art zu schaffen. Im Falle eines Antriebs für optische Elemente soll die Positionierung optischer Elemente beliebig flexibel erfolgen können und die gesamte Einheit so weit miniaturisierbar sein, dass Durchmesser im Bereich weniger Millimeter erreichbar sind.

Erfindungsgemäß wird diese Aufgabe durch einen elektromagnetischen Wanderfeld-Linearmotorgemäß Anspruch 1 erreicht, bei dem die Magnetspulen um ein Hüllrohr gewundene, geschlossene Leiterdrahtwicklungen aufweisen und der Permanentmagnet axial polarisiert und im Inneren einer Gleithülse angeordnet ist und die Gleithülse in dem Hüllrohr längs beweglich geführt ist.

Wenigstens Teile einer Außenoberfläche der Gleithülse und wenigstens Teile einer Innenwand des Hüllrohres sind als Gleitflächen ausgebildet und Wirken im Sinne eines Gleitlagers zusammen.

Neben einem längsgestreckten Hüllrohr mit Kreisquerschnitt und einer zylinderwandförmigen Gleithülse sind aus Ausführungsvarianten denkbar, in denen die Gleitflächen des Hüllrohrs und/oder der Gleithülse beispielsweise streifenförmig ausgebildet sind und in Längsrichtung des Hüllrohrs bzw. der Gleithülse verlaufen. Ebenso können das Hüllrohr
oder die Gleithülse eine Querschnittsgeometrie oder Führungsnuten und entsprechende, in die Führungsnut eingreifende Vorsprünge am jeweils anderen Bauteil aufweisen.

Vorzugsweise sind die Gleitflächen des Hüllrohrs und der Gleithülse zur Minimierung von Reibung und Verschleiß poliert und können zusätzlich mit einem Hartstoff (wie Si₃N₄, SiC oder diamantähnlichem Kohlenstoff, kurz DLC) beschichtet sein.

Indem die Wicklungen der Magnetspulen vollständig um das Hüllrohr gewunden sind, ist ein besonders einfacher und kleiner Aufbau des Linearmotors möglich. Das ortsveränderliche magnetische Wanderfeld bewegt den Permanentmagneten, der beispielsweise mit ebenfalls in der Gleithüse positionierten optischen Elementen verbunden sein kann. Auf diese Weise ergibt sich ein besonders kleiner positionsgenauer Linearantrieb für optische Elemente.

In einer bevorzugten Ausführungsvariante sind an beiden Längsenden des Permanentmagneten weichmagnetische Läuferpolschuhe angeordnet. Erfindungsgemäß ist ein weichmagnetisches Außenrohr vorgesehen, welches vorzugsweise das Hüllrohr umschließt und in dem die Leiterdrahtwicklungen untergebracht sind. Diese beiden Maßnahmen tragen jeweils separat zu einer effizienten Nutzung des durch die Magnetspulenanordnung erzeugten elektromagnetischen Wanderfeldes bei.

Schließlich ist erfindungsgemäß eine in dem Hüllrohr axial beweglich geführte Gleithülse vorgesehen, in deren Inneren die Permanentmagneten vorzugsweise derart angeordnet ist, dass die Permanentmagneten einen Hohlraum einschließen, in dem beispielsweise optische Elemente in Form von Linsen angeordnet sein können.

Eine besonders bevorzugte Ausführungsvariante umfasst einen dreiphasigen linearen Synchronmotor der in Anspruch 1 genannten Art, der eine axiale Verschiebung von optischen Elementen entlang seiner Achse bewirkt. Sein Auf bau erlaubt eine Miniaturisierung des optischen Systems und bewahrt dabei eine große Flexibilität bei der Auslegung der Optik.

Konkret ist ein elektromagnetischer Wanderfeldmotor zur Bewegung optischer Elemente in einem Hüllrohr vorgesehen, bei dem der Motor eine axial bewegliche Gleithülse aufweist, die in dem Hüllrohr gleitet und mindestens einen axial polarisierten Permanentmagneten sowie optische Elemente aufnimmt. Außerdem ist eine Anordnung von mindestens drei Spulen vorgesehen, die um das Hüllrohr geschlungen sind und durch unabhängige, variable Bestromung ein magnetisches Wanderfeld erzeugen können, das durch einen magnetischen Rückfluss über ein weichmagnetisches Außenrohr und weichmagnetische Läuferpolschuhe konzentriert geführt und verstärkt wird. Das dreiphasige Wanderfeld dient zur axialen Bewegung des Permanentmagneten und der mit diesem verbundenen Gleithülse. Das Wanderfeld erzeugt durch Wechselwirkung mit dem Permanentmagneten Selbsthaltekräfte, die zur Festigung des Läuferorts sowie zur Positionsstabilisierung der optischen Elemente durch rücktreibende Kräfte führen.

Diese Anordnung stellt einen elektromagnetischen Wanderfeldmotor dar, der vom Prinzip her als dreiphasiger linearer Synchronmotor aufgefasst werden kann. Dieser dient zur kontinuierlichen Verschiebung einzelner Linsen, Linsengruppen oder anderer optischer Elemente (beispielsweise Prismen, Spiegel, Blenden, CCD-Chips, etc.) und eignet sich insbesondere für miniaturisierte optische Instrumente wie z.B. Endoskope. Typische Aufgaben des Motors sind das Vergrößern oder Verkleinern eines Bilds in einer Bildebene durch Bewegen eines Zoomobjektivs, Bewegen eines Bildaufnehmers oder das Einstellen der Bildschärfe durch Verschieben einer Fokussierlinse.

Hierzu gleitet pro Stellelement eine dünnwandige Gleithülse, in der sich ein in axialer Richtung polarisierter Permanentmagnet mit freiem Mitteldurchgang befindet, als Läufer in einem ortsfesten Hüllrohr. Die Gleithülse dient zur Aufnahme und Zentrierung des Permanentmagneten sowie der optischen Elemente. Sie wird durch Wechselwirkung des Permanentmagneten mit einem entlang der optischen Achse gerichteten magnetischen Wanderfeld bewegt, das durch mindestens drei nebeneinanderliegende und um das Hüllrohr gewickelte ortsfeste Spulen mit separater und variabler Bestromung entsteht. Die Position des Läufers wird durch Selbsthaltekräfte des Permanentmagneten im Magnetfeld der Spulen festgelegt, so dass keinerlei Wegmeßsystem erforderlich ist. Die Selbsthaltung ist insbesondere bei fest eingestellter Position der optischen Elemente vorteilhaft, da sie eine Fehljustage der Linsen oder Objektive durch eine ruckweise Bewegung des Instruments oder infolge der Schwerkraft verhindert. Weiterhin gelingt eine sehr präzise Einstellung der Position, da der Einfluss der Haftreibung durch kurzzeitige Erhöhung der Stromstärke beliebig reduzierbar ist. Aufgrund der Spulenanordnung und dem resultierenden Magnetfeld ist die longitudinale Abmessung des Permanentmagneten gering, so dass der optische Strahlengang kaum beeinträchtigt wird.

Erfindungsgemäß erlauben es verschiedene nebeneinander angebrachte Dreiergruppen von Spulen, den Verfahrweg des Permanentmagneten, im Gegensatz zum Tauchspulenprinzip, beliebig weit zu gestalten. Hierfür ist keinerlei zusätzliche Längenänderung des Permanentmagneten erforderlich, wodurch alle Freiheitsgrade zur Gestaltung optischer Systeme erhalten bleiben und insbesondere die unabhängige Verschiebung verschiedener Linsen oder Linsengruppen eines optischen Systems durch mehrere Aktoren ermöglicht wird.

Optische Instrumente wie Endoskope, Videokameras für die Mikromontage und zur Überwachung müssen einen möglichst geringen Durchmesser aufweisen. Ziel muss es daher sein, eine Miniaturisierung des gesamten optischen Systems einschließlich der Aktorik für die Linsenverstellung zu erreichen. Dies wird durch den erfindungsgemäßen feldgeführten permanentmagnetischen Wanderfeldmotor erreicht. Er lässt sich platzsparend und bis zu wenigen Millimeter im Durchmesser ausführen, wobei die Positioniergenauigkeit im Mikrometerbereich liegt.

In allen Ausführungsformen ist der elektromagnetische Wanderfeldmotor der vorliegenden Erfindung bevorzugt ausgebildet ist, zwecks Sterilisation ohne Beeinträchtigung der Funktionsfähigkeit mehrere Stunden einer Temperatur von mindestens 133 °C ausgesetzt zu werden.

Die Erfindung wird nachfolgend anhand von Zeichnungen und darin dargestellten Ausführungsbeispielen beschrieben. In den Zeichnungen zeigen:
- Fig. 1:: Schnittzeichnung des dreiphasigen linearen Synchronmotors.
- Fig. 2:: Linearantrieb entsprechend Fig. 1 jedoch mit drei Spulensystemen mit je drei Spulen (4a,b,c) zur Verlängerung des Fahrwegs.
- Fig. 8:: Linearantrieb entsprechend Fig. 1 jedoch mit dreipoligem Läufer (11).

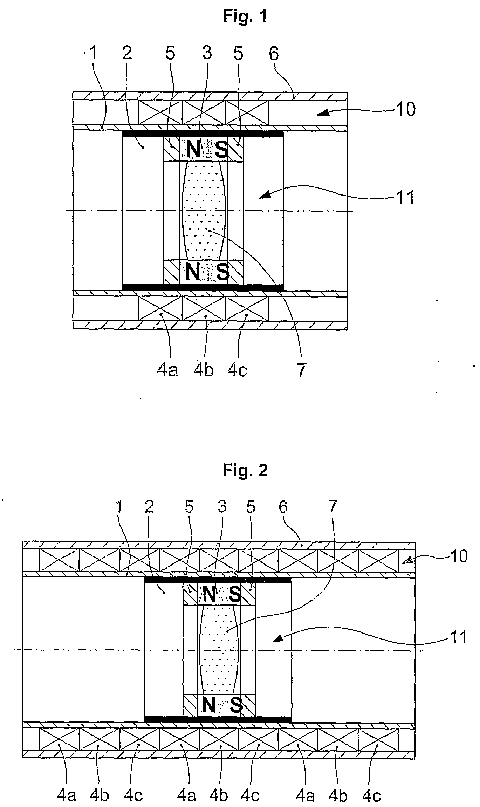

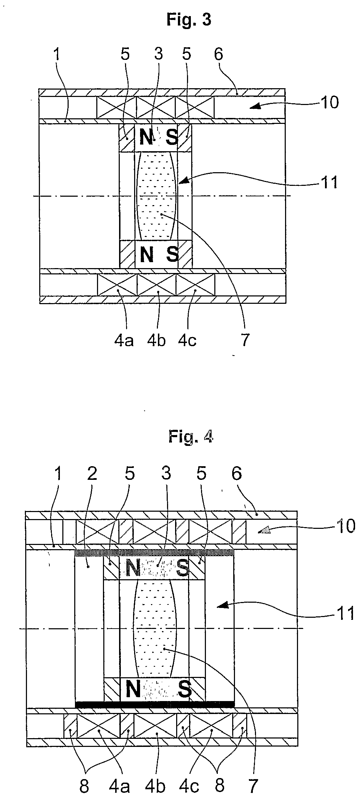

- Fig. 3:: Linearantrieb entsprechend Fig. 1 jedoch ohne Gleithülse (2).
- Fig. 4:: Linearantrieb entsprechend Fig. 1 jedoch mit weichmagnetischen Statorpolschuhen (8) zwischen den Spulen (4) zur Führung des magnetischen Flusses.

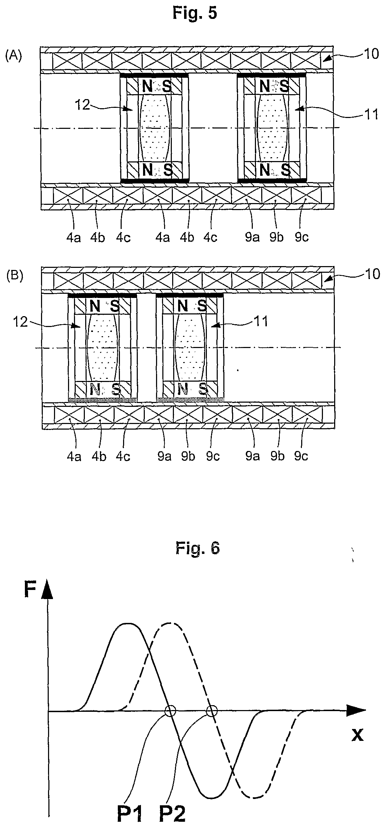

- Fig. 5:: Zwei getrennt voneinander ansteuerbare Läufer (11 und 12) mit überlappenden Verfahrwegen in einem Spulensystem.
- Fig. 6:: Axialer Verlauf der resultierenden Axialkraft (F) als Funktion des Wegs (x) für zwei unterschiedliche Phasenansteuerungen.

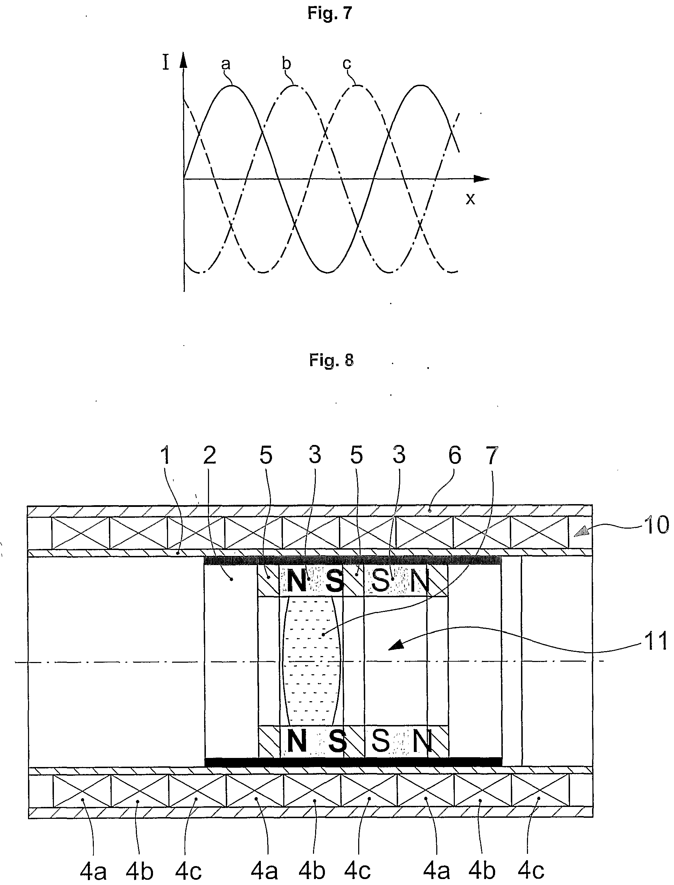

- Fig. 7:: Bestromung (I) der drei Spulen (a, b, c) in Abhängigkeit des Ortes (x).

In Fig. 1 ist anhand einer Schnittzeichnung der grundsätzliche Aufbau des dreiphasigen linearen Synchronmotors gemäß Anspruch 1 dargestellt. Gezeigt wird ein ortsfester Stator (10), der aus einem Hüllrohr (1), drei um das Hüllrohr gewickelten Spulen (4a, b, c) und einem Außenrohr (6) zusammengesetzt ist. Das Hüllrohr (1) des Stators (10) dient zur Führung des axial verschiebbaren Läufers (11), der von einer Gleithülse (2) gebildet ist sowie von einem innerhalb der Gleithülse befestigten axial magnetisierten Permanentmagneten (3) mit freiem Mitteldurchgang. In diesem ist in dem Beispiel ein optisches Element eingebettet, beispielsweise eine Linse (7). Ein das Bewegen und Positionieren des Läufers (11) bewirkendes Magnetfeld ergibt sich aus der Überlagerung des Magnetfeldes des Permanentmagneten (3) und der stromdurchflossenen Spulen (4a, b, c), die variabel und unabhängig voneinander, jedoch stets in einem vorgegebenen Verhältnis zueinander (Fig. 7), bestromt werden können. Zur Führung des magnetischen Flusses dienen die am Permanentmagneten angebrachten Läuferpolschuhe (5) und das Außenrohr (6), die beide aus weichmagnetischen Materialien bestehen.

Der Magnet (3) wird zur Miniaturisierung vorzugsweise aus permanentmagnetischen Materialien mit höchsten Energiedichten wie beispielsweise Neodym-Eisen-Bor oder Samarium-Kobalt hergestellt. Das Hüllrohr (1) und die Gleithülse (2) dienen einzig der Führung des Läufers (11) im Stator (10) und sollen das Magnetfeld nicht beeinflussen. Sie bestehen daher aus nichtferromagnetischem Material wie beispielsweise Chrom-Nickel-Stahl oder Kupfer-Beryllium. Zur Minimierung von Reibung und Verschleiß sind die Gleitflächen (auch als Laufflächern bezeichnet) des Hüllrohrs (1) und der Gleithülse (2) poliert und können zusätzlich mit einem Hartstoff (wie Si₃N₄, SiC oder diamantähnlichem Kohlenstoff, kurz DLC) beschichtet sein. Der dargestellte Aufbau kann zu folgenden Varianten modifiziert werden, die auch untereinander kombinierbar sind:
(I) Fig. 2: gezeigt ist der Linearantrieb entsprechend Fig. 1 jedoch mit drei Spulensystemen mit je drei Spulen (4a, b, c), wobei jede vierte Spule die gleiche Bestromung erfährt. Die Strecke, in der der Läufer (11) aktiv verschoben wird, ist im Vergleich zu Fig. 1 verdreifacht. Auf diese Weise kann die aktive Verfahrstrecke gemäß Anspruch 2 beliebig verlängert werden, wobei eine gleichzeitige axiale Verlängerung des Läufers (11) nicht erforderlich ist. Der Läufer (11) kann kontinuierlich und mit konstanter axialer Antriebskraft durch alle Spulensystem hindurch verschoben werden.
(II) Fig. 8 zeigt einen Wanderfeldmotor der zuvor beschriebenen Art, bei dem zwei Permanentmagnete des Läufers gegensinnig angeordnet sind. Dies hat den Vorteil, dass zusätzliche Spulen (bei mehr als drei Spulen) von einem magnetischen Fluss durchflossen werden, die eine zusätzliche Lorenzkraft erzeugen. Damit nimmt die maximale Antriebskraft und die Steifigkeit bei gleicher elektrischer Leistung zu. Im Prinzip kann der Läufer beliebig viele Pole (>=2) haben.
(III) Fig. 3: gezeigt ist der Linearantrieb entsprechend Fig. 1 jedoch ohne Gleithülse (2). Durch diesen Verzicht lässt sich radialer Bauraum gewinnen. In diesem Fall dienen die Mantelflächen der Polschuhe, des Permanentmagneten oder beider Komponenten als Lauf- oder Gleitflächen, die zur Minimierung von Reibung und Verschleiß mit Hartstoff beschichtet sein können.
(IV) Fig. 4: gezeigt ist der Linearantrieb entsprechend Fig. 1 jedoch mit ringförmigen, weichmagnetischen Statorpolschuhen (8) zwischen den Spulen (4) zur Führung des magnetischen Flusses. Daraus ergeben sich gemäß Anspruch im Vergleich zu der Luftspulenanordnung (Fig. 1) höhere Stellkräfte. Die Axialkraft ist aber ortsabhängig und kann je nach Auslegung zu einer mehr oder weniger ausgeprägten Rastkraft führen.
(V) Fig. 5: Darstellung eines Ausführungsbeispiels, wie gemäß Anspruch 3 zwei Läufer (11 und 12) mit überlappenden Verfahrstrecken getrennt voneinander verschoben werden können. Der dargestellte Stator (10) entspricht Fig. 2, die beiden Läufer (11 und 12) entsprechen Fig. 1. Im oberen Teil (A) von Fig. 5 wird der Läufer (11) von den zwei Spulensystemen (4) bewegt, während ein davon unabhängig bestromtes Spulensystem (9) auf den Läufer (12) einwirkt. Wird nun die mittlere Dreiergruppe von Spulen an das System (9) angeschlossen (untere Teilabbildung B), so kann der Läufer (12) in den Bereich verfahren werden, in dem vorher Läufer (11) mit dem Spulensystem (4) bewegt wurde. Vor dem Umschalten der Bestromung des mittleren Dreierspulenpakets sollte der Läufer (11) aus dem mittleren Spulensystems herausgefahren werden, da er ansonsten - gemeinsam mit dem Läufer (12) - von dem System (9) angesprochen wird.

Fig. 6 zeigt den Verlauf der resultierenden Axialkraft (F) eines gattungsgemäßen Wanderfeldmotors in der Ausführung mit Luftspulen (gemäß Fig. 1 bis Fig. 3 und Fig. 8) als Funktion des Wegs (x) (durchgezogene Linie). Der Nulldurchgang der Axialkraft (P1) legt die jeweilige Sollposition des Permanentmagneten (3) und damit der Gleithülse (2) fest. Die Steigung an dieser Stelle führt zu rücktreibenden Kräften. Eine Erhöhung der Stromamplituden ergibt eine größere Steigung und größere Rückstellkräfte. Der Nulldurchgang der gestrichenen Linie (P2) zeigt eine neue Sollposition bei Fortschreiten des Wanderfelds durch geänderte relative Stromamplituden der Spulen (4). Dabei kann die Sollposition beliebig genau vorgegeben werden.

In Fig. 7 ist die Bestromung (I) der drei Spulen (a, b, c) in Abhängigkeit des Phasenwinkels bzw. des Ortes (x) dargestellt. Die Ströme in einem dreiphasigen Drehfeld sind um jeweils 120° phasenversetzt. Durch die Bestromung ergibt sich - unter Einhaltung dieser Phasenbeziehung - ein resultierendes Magnetfeld, dessen örtliche Verteilung innerhalb des Stators (10) von dem absoluten Phasenwinkel (entspricht der x-Achse) der drei Ströme abhängig ist. Da der absolute Phasenwinkel der Ströme beliebig genau wählbar ist, kann auch die Lage des Magnetfeldes und somit die Position des Läufers (x) beliebig fein vorgegeben werden.

## Patentansprüche

1. Elektromagnetischer Wanderfeldmotor zur Bewegung von mindestens einem optischen Element in einem Hüllrohr (1), wobei der Wanderfeldmotor eine axial bewegliche Gleithülse (2) aufweist, die in dem Hüllrohr (1) gleitend geführt ist und zusammen mit mindestens einem im Inneren der Gleithülse angeordneten, axial polarisierten Permanentmagnet (3) einen Läufer (11) bildet, wobei der Wanderfeldmotor weiterhin eine Magnetspulenanordnung (4) von Spulen mit geschlossenen Leiterdrahtwicklungen aufweist, die um das Hüllrohr (1) gewunden sind und durch unabhängige, variable Bestromung ein magnetisches Wanderfeld erzeugen können, das durch einen magnetischen Rückfluss über ein weichmagnetisches Außenrohr (6) und weichmagnetische Läuferpolschuhe (5) konzentriert geführt und verstärkt wird, wobei das dreiphasig erzeugte Wanderfeld zur axialen Bewegung des Permanentmagneten (3) und damit der Gleithülse (2) dient und durch Wechselwirkung mit dem Permanentmagneten (3) Selbsthaltekräfte erzeugt, die zur Festlegung des Läuferorts sowie zur Positionsstabilisierung der optischen Elemente (7) durch rücktreibende magnetische Kräfte führen, wobei das mindestens eine optische Element an dem Läufer (11) befestigt ist, wobei eine äußere Mantelfläche der Gleithülse (2) und wenigstens ein Teil der Innenwandoberfläche des Hüllrohrs Gleitflächen bilden, die im Sinne eines Gleitlagers zusammenwirken **dadurch gekennzeichnet,**
**dass** die Magnetspulenanordnung (4) mindestens ein ganzzahliges Vielfaches von drei Spulen aufweist
und **dass** mehrere Läufer (11) gleicher Bauart durch getrennte Bestromung verschiedener, axial versetzter Dreierspulengruppen, individuell in einem gemeinsamen Hüllrohr (1) verfahrbar angeordnet sind, und dass die Verfahrwege der unterschiedlichen Läufer (11) durch Umschalten der Spulenbestromung überlappend sind.

2. Elektromagnetischer Wanderfeldmotor nach Anspruch 1, **dadurch gekennzeichnet, dass** die Gleitflächen von Gleithülse (2) oder Hüllrohr (1) oder beiden mit Hartstoffschichten wie Si₃N₄, SiC oder DLC, also diamantähnlichem Kohlenstoff, bedeckt sind, um die Reibung und den Verschleiß zu reduzieren.

3. Elektromagnetischer Wanderfeldmotor nach einem der Ansprüche 1 bis 2, **dadurch gekennzeichnet, dass** die weichmagnetischen Läuferpolschuhe (5) zur Führung des magnetischen Flusses am Permanentmagneten (3) angebracht sind.

4. Wanderfeld-Linearmotor nach Anspruch 3, **dadurch gekennzeichnet, dass** die weichmagnetischen Läuferpolschuhe (5) an beiden Längsenden des Permanentmagneten (3) angeordnet sind.

5. Wanderfeld-Linearmotor nach Anspruch 1, **dadurch gekennzeichnet, dass** das Hüllrohr ein nicht ferromagnetisches Hüllrohr (1) ist.

6. Wanderfeld-Linearmotor nach einem der Ansprüche bis 5, **dadurch gekennzeichnet, dass** das weichmagnetische Außenrohr (6) die Magnetspulenanordnung (4) umschließt.

7. Elektromagnetischer Wanderfeldmotor nach einem der Ansprüche 1 bis 6, **dadurch gekennzeichnet, dass** der axial magnetisierte Permanentmagnet (3) eine axiale Bohrung für einen optischen Strahlengang aufweist.

8. Elektromagnetischer Wanderfeldmotor nach einem der Ansprüche 1 bis 7, **dadurch gekennzeichnet, dass** der axial magnetisierte Permanentmagnet (3) ringförmig ausgebildet ist.

9. Elektromagnetischer Wanderfeldmotor nach einem der Ansprüche 1 bis 8, **dadurch gekennzeichnet, dass** weichmagnetische Statorpolschuhe (8) zwischen den einzelnen Spulen (4) angebracht sind, um die resultierende Axialkraft zu erhöhen.

10. Elektromagnetischer Wanderfeldmotor nach Anspruch 1, **gekennzeichnet durch** eine Aneinanderreihung weiterer Dreiergruppen von Spulen (4a,b,c) auf dem Hüllrohr (1) derart, dass der Verfahrweg des Läufers (11) verlängert ist, ohne dass dazu die axiale Länge des Läufers (11) geändert werden muss.

11. Elektromagnetischer Wanderfeldmotor nach Anspruch 1, **dadurch gekennzeichnet, dass** der Läufer aus mehreren Segmenten von axial magnetisierten Permanentmagneten besteht, deren Polarität jeweils gegensinnig angeordnet ist.

12. Elektromagnetischer Wanderfeldmotor nach Anspruch 1, **dadurch gekennzeichnet, dass** das optische Element innerhalb der Gleithülse (2) angeordnet ist.

## Claims

1. Electromagnetic gliding field motor for moving at least one optical element in an outer sheath (1), wherein the gliding field motor comprises an axially mobile sliding sleeve (2), which is guided so as to slide in the outer sheath (1) and forms an armature (11) with at least one axially polarized permanent magnet (3) disposed inside the sliding sleeve, the gliding field motor also having a magnetic coil arrangement (4) comprising closed windings of conductive wire that are wound around the outer sheath (1) and, by being supplied independently and variably with current, can generate a magnetic gliding field, that is intently guided and intensified by magnetic reflux via a soft magnetic outer tube (6) and soft magnetic armature pole shoes (5), the three-phase gliding field producing the axial movement of the permanent magnet (3) and hence of the sliding sleeve (2) and, by interacting with the permanent magnet (3), generates self-holding forces, that lead to the location of the armature being fixed and to the position of the optical elements (7) being stabilized by restoring magnetic forces, and at least one optical element being secured on the armature (11), wherein an outer surface of the sliding sleeve (2) and at least one portion of the inner wall surface of the outer sheath form sliding surfaces, that co-operate as a sliding bearing, **characterized in that** the magnetic coil arrangement (4) has at least one integral multiple of three coils and **in that** a plurality of armatures (11) of identical design are disposed in a common outer sheath (1) and can be individually moved by separately supplying current to different, axially offset groups of triple coils and **in that** the paths of travel of the different armatures (11) are superimposed by reversing the current supplied to the coils.

2. Electromagnetic gliding field motor according to claim 1, **characterized in that** the sliding surfaces of the sliding sleeve (2) or the outer sheath (1) or both are covered with layers of hard material such as Si₃N₄, SiC or DLC, i.e diamond-like carbon, in order to reduce friction and wear.

3. Electromagnetic gliding field motor according to any one of claims 1 to 2, **characterized in that** soft magnetic armature pole shoes (5) are mounted on the permanent magnet (3) to guide the magnetic flux.

4. Gliding field linear motor according to claim 3, **characterized in that** the soft magnetic armature pole shoes (5) are disposed at the two far ends of the permanent magnet (3).

5. Gliding field linear motor according to claim 1, **characterized in that** the outer sheath is a non-ferromagnetic outer sheath (1).

6. Gliding field linear motor according to any one of claims 1 to 5, **characterized in that** the soft magnetic outer tube (6) encloses the magnetic coil arrangement (4).

7. Electromagnetic gliding field motor according to any one of claims 1 to 6, **characterized in that** the axially magnetized permanent magnet (3) has an axial bore for an optical beam path.

8. Electromagnetic gliding field motor according to any one of claims 1 to 7, **characterized in that** the axially magnetized permanent magnet (3) is annular in shape.

9. Electromagnetic gliding field motor according to any one of claims 1 to 8, **characterized in that** soft magnetic stator pole shoes (8) are mounted between the separate coils (4) to increase the resultant axial force.

10. Electromagnetic gliding field motor according to claim 1, **characterized by** additional groups of triple coils (4a, b, c) being arranged in sequence on the outer sheath (1) such that the path of travel of the armature (11) is extended without the axial length of the armature (11) having to be modified.

11. Electromagnetic gliding field motor according to claim 1, **characterized in that** the armature consists of a plurality of segments of axially magnetized permanent magnets, each with a polarity that is opposite that of the adjacent magnet.

12. Electromagnetic gliding field motor according to claim 1, **characterized in that** the optical element is disposed inside the sliding sleeve (2).

## Revendications

1. Moteur électromagnétique à champ d'ondes progressives pour le déplacement d'au moins un élément optique dans un tube (1) enveloppe, le moteur à champ d'ondes progressives ayant un manchon (2) glissant mobile axialement, qui est guidé à glissement dans le tube (1) enveloppe et qui forme un rotor (11) ensemble avec au moins un aimant (3) permanent disposé à l'intérieur du manchon glissant et polarisé axialement, le moteur à champ d'ondes progressives ayant en outre un agencement (4) de bobines magnétiques à enroulements de fil conducteur fermés, qui sont enroulés autour du tube (1) enveloppe et qui peuvent produire, par une alimentation en courant variable indépendante, un champ magnétique à ondes progressives, qui est guidé de manière concentrée et amplifiée par un reflux magnétique par l'intermédiaire d'un tube (6) extérieur à magnétisme doux et d'un épanouissement (5) polaire de rotor à magnétisme doux, le champs à ondes progressives produit triphasé servant à déplacer axialement l'aimant (3) permanent et ainsi le manchon (2) glissant, et produisant par interaction avec l'aimant (3) permanent des forces d'auto maintien, qui provoquent la fixation de l'emplacement du rotor ainsi que la stabilisation en position des éléments (7) optiques, par des forces magnétiques rétropropulsives, le au moins un élément optique étant fixé au rotor (11), une surface latérale extérieure du manchon (2) glissant et au moins une partie de la surface de paroi intérieure du manchon glissant formant des surfaces de glissement, qui coopèrent au sens d'un palier lisse,
**caractérisé**
**en ce que** l'agencement (4) de bobines magnétiques a au moins un multiple en nombre entier de trois bobines
et **en ce que** plusieurs rotors (11) de même type de construction sont disposés de manière à pourvoir être déplacés individuellement par alimentation en courant séparée de divers groupes de trois bobines décalés axialement dans un tube enveloppe (1) commun et en ce que les trajets de déplacement des rotors (11) différents se chevauchent par commutation de l'alimentation en courant des bobines.

2. Moteur à champ d'ondes progressives électromagnétiques suivant la revendication 1, **caractérisé en ce que** les surfaces de glissement du manchon glissant ou du tube enveloppe (1), ou des deux, sont recouvertes de matière dure comme Si₃N₄, SiC ou DLC, donc de carbone analogue au diamant, pour réduire le frottement et l'usure.

3. Moteur à champ d'ondes progressives électromagnétiques suivant l'une des revendications 1 à 2, **caractérisé en ce que** les épanouissements (5) polaires de rotor à magnétisme doux sont, pour conduire le flux magnétique, mis sur l'aimant (3) permanent.

4. Moteur à champ d'ondes progressives électromagnétiques suivant la revendication 3, **caractérisé en ce que** les épanouissements (5) polaires de rotor à magnétisme doux sont disposés aux deux extrémités longitudinales de l'aimant (3) permanent.

5. Moteur à champ d'ondes progressives électromagnétiques suivant la revendication 1, **caractérisé en ce que** le tube enveloppe est un tube enveloppe (1) non ferromagnétique.

6. Moteur à champ d'ondes progressives électromagnétiques suivant l'une des revendications 1 à 5, **caractérisé en ce que** le tube (6) extérieur à magnétisme doux entoure l'agencement (4) de bobine magnétique.

7. Moteur à champ d'ondes progressives électromagnétiques suivant l'une des revendications 1 à 6, **caractérisé en ce que** l'aimant (3) permanent aimanté axialement a un trou axial pour un passage d'un rayonnement optique.

8. Moteur à champ d'ondes progressives électromagnétiques suivant l'une des revendications 1 à 7, **caractérisé en ce que** l'aimant (3) permanent à aimantation axiale est de forme annulaire.

9. Moteur à champ d'ondes progressives électromagnétiques suivant l'une des revendications 1 à 8, **caractérisé en ce que** des épanouissements (8) polaires de stator à magnétisme doux sont mis entre les diverses bobines (4) pour augmenter la force axiale résultante.

10. Moteur à champ d'ondes progressives électromagnétiques suivant la revendication 1, **caractérisé par** une succession d'autres groupes triples de bobines (4a, b, c) sur le tube enveloppe (1), de manière à prolonger le trajet de déplacement du rotor (11) sans avoir à modifier pour cela la longueur axiale du rotor (11).

11. Moteur à champ d'ondes progressives électromagnétiques suivant la revendication 1, **caractérisé en ce que** le rotor est constitué de plusieurs segments d'aimant permanent aimanté axialement, dont la polarité est de sens contraire respectivement.

12. Moteur à champ d'ondes progressives électromagnétiques suivant la revendication 1, **caractérisé en ce que** l'élément optique est disposé à l'intérieur du manchon (2) glissant.
